# EUROPEAN PATENT SPECIFICATION

(11) **EP 2 129 042 B1**
(45) Date of publication and mention of the grant of the patent: **03.10.2012**
(21) Application number: 08715153.6
(22) Date of filing: 05.03.2008
(51) Int. Cl.: H04L 12/24, H04L 12/26

(54) **A MULTICAST NETWORK SYSTEM, NODE AND A METHOD FOR DETECTING A FAULT OF A MULTICAST NETWORK LINK**
MULTICAST-NETZWERKSYSTEM, KNOTEN UND VERFAHREN ZUM DETEKTIEREN EINES FEHLERS EINER MULTICAST-NETZWERKVERBINDUNG
SYSTÈME DE RÉSEAU MULTIDIFFUSION, NOEUD ET PROCÉDÉ DE DÉTECTION DE DÉFAUT DANS UN LIEN DE RÉSEAU MULTIDIFFUSION

(30) Priority: 08.03.2007 CN 200710005643
(43) Date of publication of application: 02.12.2009
(73) Proprietor: Huawei Technologies Co., Ltd., Shenzhen, Guangdong Province 518129 (CN)
(72) Inventor: ZHONG, Ji, Guangdong province 518129 (CN); XIONG, Yanqing, Guangdong Province 518129 (CN)
(74) Representative: Pfenning, Meinig & Partner GbR
(86) International application number: PCT/CN2008/070417
(87) International publication number: WO 2008/106892

(56) References cited:
- CN-A- 1 423 876
- CN-A- 101 039 167
- US-B1- 6 940 821
- US-B2- 7 088 684
- CAVENDISH D ET AL: "Operation, administration, and maintenance in MPLS networks" IEEE COMMUNICATIONS MAGAZINE, IEEE SERVICE CENTER, PISCATAWAY, US, vol. 42, no. 10, 1 October 2004 (2004-10-01), pages 91-99, XP011120081 ISSN: 0163-6804
- NEIL HARRISON PETER WILLIS BRITISH TELECOM SHAHRAM DAVARI PMC-SIERRA BEN MACK-CRANE TELLABS HIROSHI OHTA NTT: "OAM Functionality for MPLS Networks; draft-harrison-mpls-oam-00.txt" IETF STANDARD-WORKING-DRAFT, INTERNET ENGINEERING TASK FORCE, IETF, CH, 1 February 2001 (2001-02-01), XP015014105 ISSN: 0000-0004
- DAVID ALLAN NORTEL NETWORKS: "A Framework for MPLS Data Plane OAM; draft-allan-mpls-oam-frmwk-05.txt" IETF STANDARD-WORKING-DRAFT, INTERNET ENGINEERING TASK FORCE, IETF, CH, no. 5, 1 October 2003 (2003-10-01), XP015010020 ISSN: 0000-0004
- SEISHO YASUKAWA (NTT) ADRIAN FARREL (OLDDOG CONSULTING) ZAFAR ALI (CISCO SYSTEMS) BILL FENNER (AT&T RESEARCH): "Detecting Data Plane Failures in Point-to-Multipoint MPLS Traffic Engineering - Extensions to LSP Ping; draft-ietf-mpls-p2mp-lsp-ping-01.t" IETF STANDARD-WORKING-DRAFT, INTERNET ENGINEERING TASK FORCE, IETF, CH, vol. mpls, no. 1, 1 April 2006 (2006-04-01), XP015045398 ISSN: 0000-0004
- YASUKAWA NTT CORPORATION A FARREL OLD DOG CONSULTING D KING ARIA NETWORKS LTD T NADEAU CISCO SYSTEMS S ET AL: "Operations and Management (OAM) Requirements for Point-to-Multipoint MPLS Networks; rfc4687.txt" IETF STANDARD, INTERNET ENGINEERING TASK FORCE, IETF, CH, 1 September 2006 (2006-09-01), XP015047433 ISSN: 0000-0003

## Description

### Field of the Invention

The present invention relates to the field of multicast network technologies, and in particular, to a multicast network system, a node and a method for detecting link failures in a multicast network.

### Background of the Invention

Multicast is a point-to-multipoint or multipoint-to-multipoint communication mode. With the development of the Internet, the multicast network is applied in more and more fields, such as video on demand (VOD), video conference and distance education.

Currently, a multi-protocol label switching operation and maintenance (MPLS OAM) technology provides a set of link failure detection mechanisms for the MPLS multicast network. The MPLS OAM technology is used to detect point-to-point link failures of a data plane, including label switched path (LSP) break, LSP label switching error, LSP label merging error, and automatic LSP merging and denial of service (DoS).

In a method for detecting link failures by using the MPLS OAM technology in the prior art, a shadow point-to-point LSP is established for protection of some critical paths only. The protected paths are used to transmit user packets. The shadow point-to-point LSP is used to transmit connectivity verification (CV) packets or fast failure detection (FFD) packets. The shadow point-to-point LSP and the protected paths have the same per-hop behavior (PHB). When the shadow point-to-point LSP fails, it is regarded that the protected paths also fail.

A source label switching router (LSR) periodically sends a CV packet or an FFD packet to an LSP at any layer. The destination LSR detects the receiving state of the CV packet or FFD packet in real time, hoping to receive the CV packet or FFD packet from the source LSR at the same rate.

The CV packet or FFD packet sent from the source LSR carries a trail termination source identifier (TTSI) that is used to differentiate the information of the LSR and LSP sending the packet. The destination LSR detects a packet based on the period in which the source LSR sends a CV packet or an FFD packet. In the existing protocol, the destination LSR generates defect indicators by counting the number of expected and unexpected CV packets or FFD packets within three consecutive receiving periods.

The type of defect indicators generated by the destination LSR includes LSP break (dLOCV), label switching error (dTTSI_Mismatch), LSP label merging error (dTTSI_Mismerge), and automatic LSP merging (dExcess), and DoS attack. In addition, any LSR of the LSP may generate an LSP data plane defect indicator due to failures in the MPLS bearer layer.

If an LSR that generates a defect indicator is the destination LSR, the destination LSR sends a forward defect indicator (FDI) to the next-layer LSP periodically, notifying the next-layer LSP of the type and location of failures. Meanwhile, the destination LSR sends a backward defect indicator (BDI) to the source LSR of the LSP at the same layer, notifying the source LSR of the type and location of failures. BDI packets are transmitted through a different transmission path from the user packets and FDI packets. The BDI packets may be transmitted through a reverse LSP or an out-of-band path, for example, IP transmission.

If an LSR that generates a defect indicator is not the destination LSR, the LSR sends an FDI packet to the destination LSP of the LSP only, and does not send a BDI packet to the source LSR. After detecting the FDI packet, the destination LSR sends a BDI packet to the source LSR.

The BDI and FDI packets carry fields defined by the International Telecommunication Union - Telecommunication Standardization Sector (ITU-T), where the fields include:
a failure type field, indicating the type of failures defined in ITU-T.1711;
a failure location field, represented by the number or address of the destination LSR that detects failures; and
a TTSI field, complying with the ITU-T.1711. If the failure type is "dLOCV", the local TTSI is reported back to the upper layer LSR; if the failure type is "dTTSI_Mismatch" or "dTTSI_Mismerge", the TTSI carried in the CV packet or FFD packet is reported back to the upper layer LSR; if an FDI packet is received, the TTSI carried in the FDI packet is reported back to the upper layer LSR.

The destination LSR switches the state of an availability state machine (ASM) according to the failure state of the local MPLS OAM and the state of the received FDI packet, while the source LSR switches the state of the ASM according to the state of the received BDI packet.

In conclusion, the link failure detection method based on the MPLS OAM technology provides a link failure detection mechanism for only few critical paths in the MPLS multicast network, but does not provide a failure detection mechanism for all the links in the MPLS multicast network. That is, the link failure detection method in the prior art does not provide a point-to-point multicast link failure detection mechanism.

D1 discloses "Operation administration, and maintenance in MPLS networks" in IEEE COMMUNICATIONS MAGAZINE vol.42, no.10 XP011120081, ISSN: 0163-6804. It specifies forward defect indication (FDI) and backward defect indication (BDI) as defect information transfer functions, in the backward directions, the purposes is to announce the existence of a defect and suppress unnecessary alarms. Especially in Alarm suppression mechanism, when the link between E and F breaks, LSPs A-H, B-J and C-k are interrupted. Then H, J and K detect dLOCV, LSR F detects the link defect and report it(the link defect) to the OSS, Then F generates FDI packet toward H, J and K. So when the F detects the failure occurred on the upper layer node of the F, the F report it to the OSS.

D2 discloses a MPLS Fault Location and Management in "OAM Functionality for MPLS Networks draft..." XP015014105 ISSN:0000-0004. The BDI does not propagate beyond its return LSP trail termination sink point, and it is disclosed at that point after any processing based its observation is carried out. The BDI is generated at a return LSP trail termination source point in response to a defect at a LSP trail termination sink point.

D3 discloses a framework for MPLS data Plane OAM xp015010020 ISSN:0000-0004. The BDI in D3 has limited applicability given that most LSPs are uni-directional, however it is very useful for interworking OAM with bi-directional pw clients.

D4 discloses traceroute responses at branch notes in "Detecting Data Plane Failure in Point-to-Multipoint MPLS..." XP015045398 ISSN:0000-0004. The branch node may need to identify more than one downstream interface in a traceroute echo response if some of the egresses that are being traced lie on different branches. This will always be the case for any branch node if all egresses are being traced.

D5 discloses a detection of label switch path defects and diagnosis of a broken label switch path XP 01504747433 ISSN:0000-0003. It discloses the ability to detect in a P2MP LSP SHOULD not require manual, hop-by-hop troubleshooting of each LSR used to switch traffic for that LSP, and rely on proactive OAM procedures. D5 also discloses the ability to diagnose a broken P2MP LSP and to isolate the failed component is required.

### Summary of the Invention

Embodiments of the present invention provide a method for detecting link failures in a multicast network, so that failures of all the links in the multicast network can be detected.

Embodiments of the present invention also provide a multicast network system that can detect failures of all the links in the multicast network.

Embodiments of the present invention also provide a source node, a branch node and a destination node that can detect failures of all the links in the multicast network.

To achieve the above objectives, the technical solution of embodiments of the present invention is implemented as follows:

A method for detecting link failures in a multicast network disclosed in an embodiment of the present invention includes:
receiving (Block 102), by a branch node on each branch link, a failure detection packet FDP sent from an upper layer node of the branch node; and
forwarding (Block 103), by the branch node, the FDP to a lower layer node of the branch node until the FDP arrives at a destination node; wherein the destination node is adapted to detect failures between the destination node and the lower layer node of the branch node according to the FDP receiving state and send a backward defect indicator BDI packet to an upper layer node of the destination node after the destination node detects the failures;
wherein the FDP sent from a source node for detecting link failures is sent to all the branch nodes of the source node on each branch link
characterized by: the method further comprising:
determining, by the branch node, a failure position where the failure occurs after receiving the BDI packet coming from the lower layer node of the branch node; and
reporting, by the branch node, the failure position where the failure occurs to the upper layer node of the branch node, when the failure occurs between the branch node and the lower layer node of the branch node.

A multicast network system, comprising:
a source node (901) adapted to send an FDP to all branch nodes;
more than one branch node (905), each branch node being adapted to receive the FDP from a upper layer node of branch node, and forward the FDP to more than one lower layer node of branch node; and
more than one destination node (909), each destination node being adapted to receive the FDP from the upper layer branch node of the destination node, and detect failures between the source node and the destination node according to the FDP receiving state,
characterized by: each branch node (905) further adapted to determine a failure position where the failure occurs after receiving the BDI packet coming from the lower layer node of the branch node; and report the failure position where the failure occurs to the upper layer node of the branch node, when the failure occurs between the branch node (905) and the lower layer node of the branch node.

A branch node, comprising:
an FDP forwarding module (914), adapted to receive an FDP from an upper layer node of the branch node, and forward the FDP to a lower layer node of the branch node;
a BDI transceiver module (906), adapted to receive a BDI sent from the lower layer node according to the FDP, and forward the BDI to the upper layer node of the branch node;
further comprising:
a branch failure processing module (907), adapted to determine the failure location, when a failure type ID carried in the BDI received from the BDI transceiver module is not a link break failure ID; or send a first command to a forward defect indicator transceiver module (908), and determine the failure location according to the failure type ID carried in the BDI, when the failure type ID is the link break failure ID; and
the forward defect indicator transceiver module (908), adapted to send a forward defect indicator (FDI) that includes the link break failure ID to the lower layer node of the branch node according to the first command of the branch failure processing module (907).

It can be seen from the technical solution of the present invention that, the tree structure characteristics of the multicast network are utilized; the source node sends an FDP to all the destination nodes; each destination node detects the FDP receiving state in real time, and detects link failures according to the FDP receiving state. Thus, failures of all links in the multicast network can be detected.

### Brief Description of the Drawings

FIG. 1 is a flowchart of a method for detecting failures of links in a multicast network according to an embodiment of the present invention;

FIG. 2 is a schematic diagram showing a multicast network system according to an embodiment of the present invention;

FIG. 3 is a schematic diagram showing a path for forwarding an FDP according to an embodiment of the present invention;

FIG. 4 is a flowchart of a method for locating a failure when a branch LSR receives a BDI packet that carries an LSP break failure ID according to an embodiment of the present invention;

FIG. 5 is a flowchart of a method for locating a failure when a branch LSR receives a BDI packet that carries a failure type ID other than an LSP break failure ID according to an embodiment of the present invention;

FIG. 6 is a schematic diagram showing a path for forwarding a BDI packet by some destination LSRs when detecting failures in an MPLS multicast network according to an embodiment of the present invention;

FIG. 7 is a schematic diagram showing a path for sending FDI packets by some LSRs in an MPLS multicast network according to an embodiment of the present invention;

FIG. 8 is a flowchart of detecting link failures when an LSP break occurs on a link between a branch LSR B_10 and a B_21 shown in FIG. 3 according to an embodiment of the present invention;

FIG. 9 is a schematic diagram showing a structure of each node in a multicast network system according to an embodiment of the present invention; and

FIG. 10 is a schematic diagram showing another structure of each node according to a multicast network system in an embodiment of the present invention.

### Detailed Description of the Embodiments

Embodiments of the present invention utilize the tree structure characteristics of the multicast network to detect failures of all links in a multicast network.

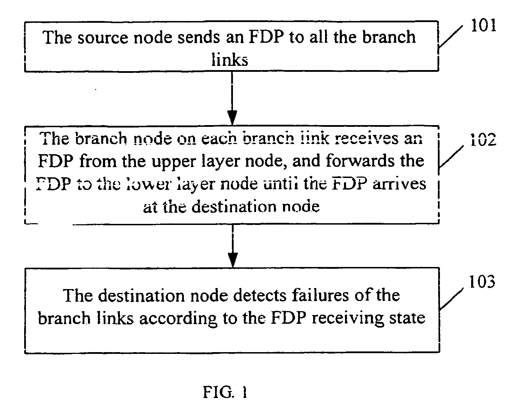

FIG. 1 is a flowchart of a method for detecting failures of links in a multicast network. As shown in FIG. 1, the method includes the following Blocks:

Block 101: The source node sends a failure detection packet (FDP) to all the branch links.

Block 102: The branch node on each branch link receives an FDP sent from an upper layer node, and forwards the FDP to a lower layer node. That is, the FDP is forwarded along the path of the user packet until it arrives at a destination node.

Block 103: The destination node receives an FDP from the upper layer node, and detects failures of the branch links according to the FDP receiving state.

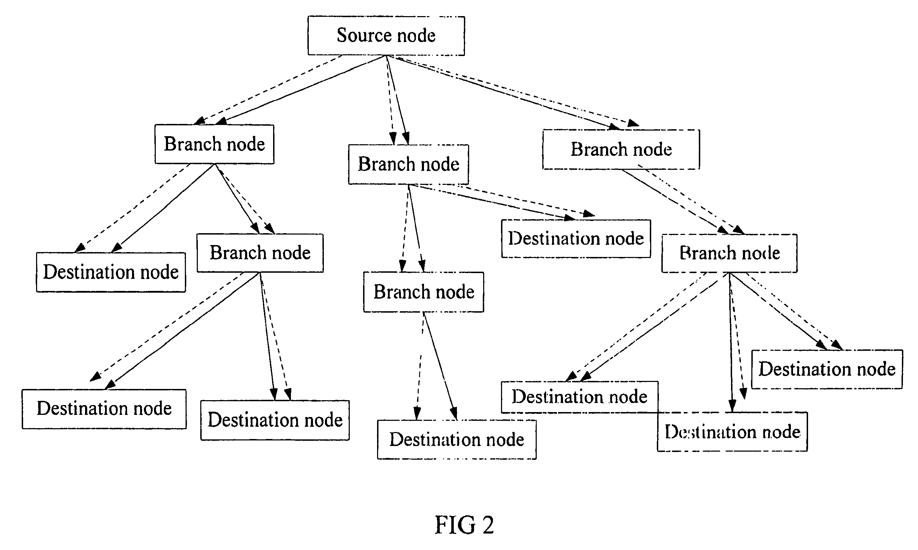

FIG. 2 is a schematic diagram showing a multicast network system according to an embodiment of the present invention. As shown in FIG. 2, a complete multicast network is designed with a tree structure, and includes a source node, a branch node, and a destination node.

The source node is adapted to send an FDP to all the branch links.

The branch node is adapted to: receive an FDP from the upper layer node, and forward the FDP to the lower layer node until the FDP arrives at the destination node.

The destination node is adapted to: receive an FDP from the upper layer node, and detect failures of the branch links according to the FDP receiving state.

In FIG. 2, the solid arrows indicate paths for sending a user packet, and dotted arrows indicate paths for sending an FDP. The FDP and the user packet are transmitted through the same path.

For better understanding of the technical solution, objectives and merits of the present invention, the following describes embodiments of the present invention in detail taking the MPLS multicast network as an example.

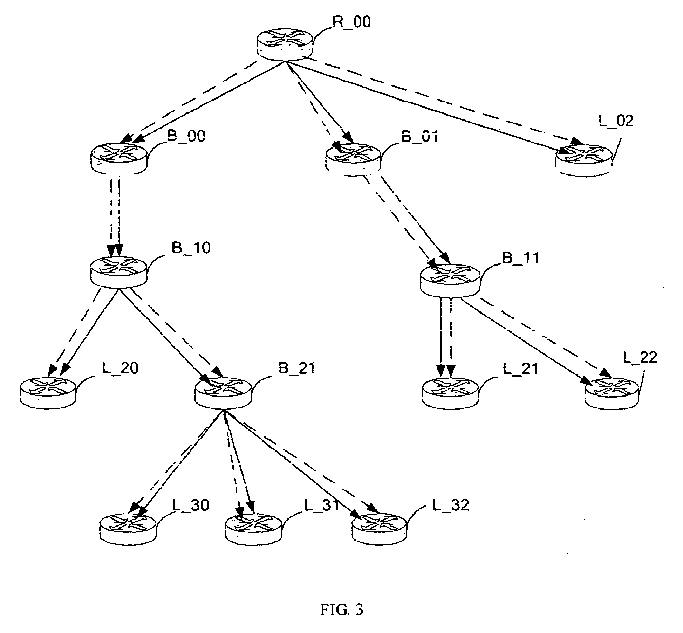

FIG. 3 is a schematic diagram showing a path for forwarding an FDP according to an embodiment of the present invention. As shown in FIG. 3, the MPLS multicast network in a tree structure includes a source LSR R_00, destination LSRs L_02, L_20, L_21, L_22, L_30, L_31 and L_32 and branch LSRs on the link between the source LSR and the destination LSR: LSR B_00, B_01, B_10, B_11, and B_21. In each LSR number, "R" indicates that the LSR is a source LSR; "B" indicates that the LSR is a branch LSR; "L" indicates the LSR is a destination LSR. The solid arrows indicate paths for forwarding a user packet, and dotted arrows indicate paths for forwarding an FDP.

As shown in FIG. 3, the source LSR R_00 sends an FDP to destination LSRs L_02, L_20, L_21, L_22, L_30, L_31 and L_32 periodically. The PDP and the user packet are forwarded by each branch LSR through the same path. The FDP may be a CV packet or an FFD packet. Each destination LSR detects the FDP receiving state in real time, and detects link failures according to the FDP receiving state. For example, the destination LSR detects link failures according to the number of expected and unexpected FDPs received within multiple successive periods. When the FDP is a CV packet or an FFD packet, the destination LSR may detect link failures according to rules defined in ITU-T.1711, and switches between the normal state and failed state.

In the multicast network shown in FIG. 2 and MPLS multicast network shown in FIG. 3, the source node sends an FDP to the destination node; the destination node may determine whether a link fails according to the FDP receiving state, but cannot locate the failure on the link. That is, the destination node cannot determine which part of the link failures in the multicast network.

Therefore, embodiments of the present invention provide a technical solution for locating the link failure from each destination node to the source node by taking the MPLS multicast network as an example. There are various types of link failures in the MPLS multicast network, such as LSP break, label switching error, LSP label merging error, automatic LSP merging and DoS attack. Thus, embodiments of the present invention provide two methods for locating link failures according to different characteristics of link failures: One is provided for locating a multicast link break, for example, LSP break failure in the MPSL multicast network; the other is provided for locating a failure other than a multicast link break in the multicast network, for example, label switching error, LSP label merging error, automatic LSP merging and DoS attack.

When a destination LSR detects a link failure according to the FDP receiving state, the destination LSR reports a BDI packet that carries a link failure type ID back to the upper layer link periodically; a branch LSR on the upper layer link receives the BDI packet and forwards the BDI packet to the upper layer node; this process continues until the BDI packet arrives at the source LSR. After a branch LSR receives the BDI packet, the branch LSR takes two processing measures according to whether the failure type ID carried in the BDI packet is an LSP break failure ID so as to locate the failure. When determining that the failure occurs on the lower layer node, the branch LSR may stop forwarding the BDI packet to the upper layer node, and report the failure position on the link to the upper layer node; when determining that the failure occurs on the upper layer node, the branch LSR continues forwarding the BDI packet to the upper layer node; if the BDI packet is forwarded to the source LSR finally, it indicates that the failure occurs on a link between the source LSR and a branch LSR of the lower layer.

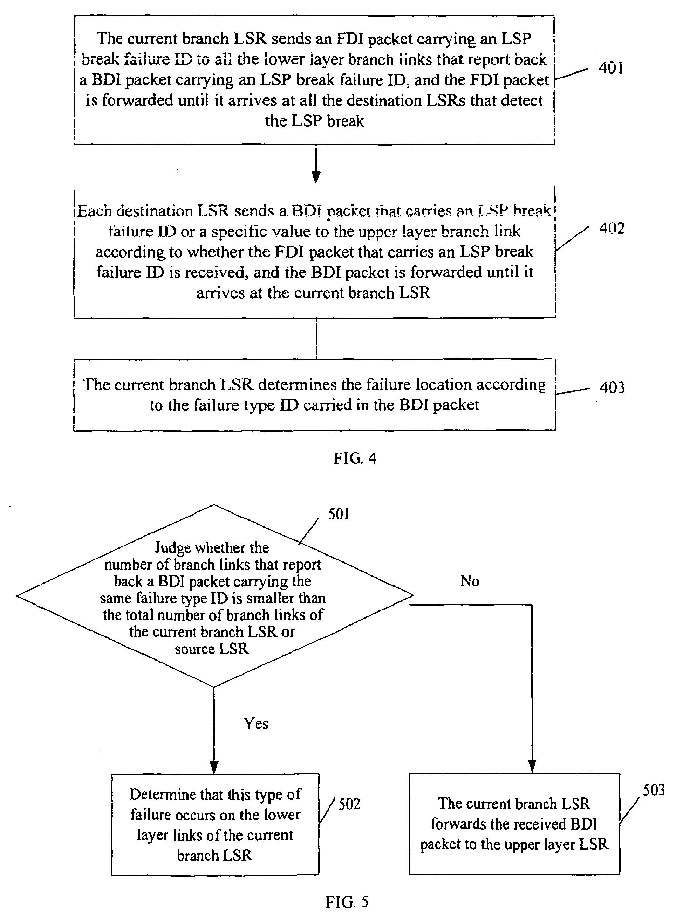

FIG. 4 is a flowchart of a method for locating a failure when a branch LSR receives a BDI packet that carries an LSP break failure ID. As shown in FIG. 4, the method includes the following Blocks:

Block 401: After receiving a BDI packet that carries an LSP break failure ID, the current branch LSR sends an FDI packet carrying an LSP break failure ID to all lower layer branch links that report back the BDI, and the FDI packet is forwarded until it arrives at all destination LSRs that detect the LSP break.

Block 402: Each destination LSR sends a BDI packet that carries a specific value for the failure type ID to the upper layer branch link after receiving the FDI packet that carries an LSP break failure ID; or continues sending an BDI packet that carries an LSP break failure ID to the upper layer branch link if not receiving the FDI packet that carries an LSP break failure ID. The branch LSR on the upper layer branch link forwards the BDI packet to the upper layer LSR, until the BDI packet arrives at the current branch LSR.

If the destination LSR receives the FDI packet that carries an LSP break failure ID sent from the current branch LSR, it indicates that no LSP failure occurs on the link between the current branch LSR and the destination LSR. In this case, the destination LSR sends a BDI packet that carries a specific value for the failure type ID to the upper layer link, and the BDI packet is forwarded by the branch LSR on the upper link until the BDI packet arrives at the current branch LSR. The specific value is uniformly specified in the communication protocol.

If the destination LSR does not receive the FDI packet that carries an LSP break failure ID sent from the current branch LSR, it indicates that an LSP failure occurs on the link between the current branch LSR and the destination LSR. In this case, the destination LSR continues sending the BDI packet that carries the LSP failure ID to the upper layer link, and the BDI packet is forwarded by the LSR on the upper layer link until the BDI packet arrives at the current branch LSR.

Block 403: The current branch LSR locates the failure according to the failure type ID carried in the received BDI packet.

If the failure type ID carried in the BDI packet received by the current branch LSR is still an LSP break failure ID, it indicates that an LSP break occurs on the lower layer link of the current branch LSR. If the failure type ID carried in the BDI packet received by the current branch LSR is a specific value rather than an LSP break failure ID, it indicates that an LSP break occurs on the link of the current branch LSR. In this case, the current branch LSR stops sending the FDI packet and sends a BDI packet that carries an LSP break failure ID to the upper layer LSR. The upper layer LSR locates the failure by using the same method. If the BDI packet is finally forwarded to the source LSR, it indicates that the failure occurs on a link between the source LSR and the branch LSR of the lower layer.

FIG. 5 is a flowchart of a method for locating a failure when a branch LSR receives a BDI packet that carries a failure type ID other than an LSP break failure ID according to an embodiment of the present invention. As shown in FIG. 5, the method includes the following Blocks:

Block 501: After receiving a BDI packet that carries a failure type ID other than an LSP break failure ID, the current branch LSR judges whether the number of branch links that report the BDI packet back to the current branch LSR is smaller than the total number of branch links of the current branch LSR; if so, the process proceeds to Block 502; otherwise, the process proceeds to Block 503.

Block 502: It is determined that this type of failure occurs on the lower layer link of the current branch LSR.

Block 503: The current branch LSR forwards the received BDI packet to an upper layer LSR. The upper layer LSR executes Block 501 to locate the failure. If the failure cannot be located, a further upper layer LSR continues to execute Block 501 (the rest may be deduced by analogy), until the failure is located.

If the number of branch links that report the BDI packet carrying the same failure type ID back to the current branch LSR is equal to the total number of branch links of the current branch LSR, that is, if all the branch links report the BDI back to the current branch LSR, the failure cannot be located on the lower layer link of the current branch LSR.

When a failure occurs on an upper layer link of the current branch LSR or all lower layer branch links of the current branch LSR, all the branch links of the current branch LSR report back a BDI packet that carries the same failure type ID. Thus, the current branch LSR cannot locate the failure in the lower layer LSR. However, the probability of failures on an upper layer link of the current branch LSR is much higher than that on all the lower layer branch links of the current branch LSR. In this case, the current branch LSR forwards the received BDI packet to an upper layer LSR, and the upper layer LSR locates the failure by using the same method. This process continues until the BDI packet is forwarded to the source LSR of a multicast link.

If the number of branch links that report the BDI packet carrying the same failure type ID back to the current branch LSR is equal to the total number of branch links of the source LSR, that is, if all the branch links report the BDI back to the source LSR, the failure may be located on all the lower layer links of the source LSR.

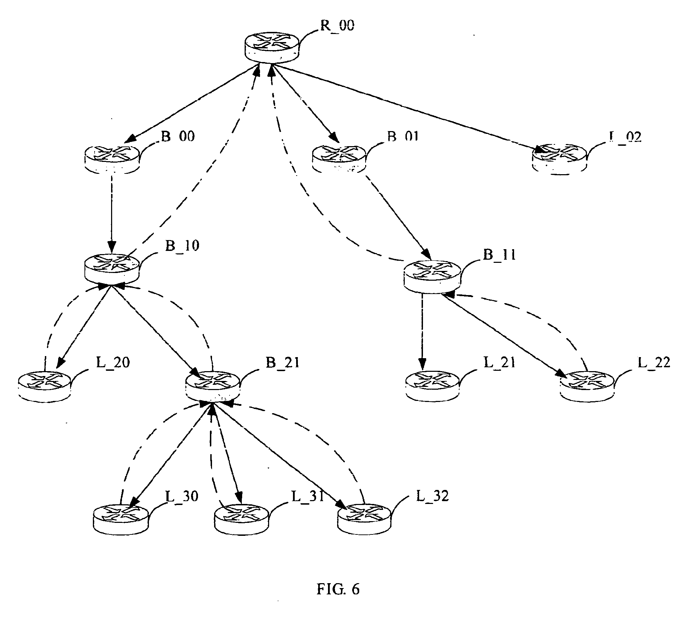

FIG. 6 is a schematic diagram showing a path for forwarding a BDI packet when some destination LSRs locate failures in an MPLS multicast network according to an embodiment of the present invention. In FIG. 6, solid arrows indicate paths for forwarding a user packet, and reverse dotted arrows indicate that destination LSRs L_20, L_30, L_31, L_32 and L_22 detect failures and send a BDI packet to the upper layer until the BDI packet arrives at the destination LSR R_00. The BDI packet may be transmitted through a reverse LSP or an out-of-band path, for example, IP transmission.

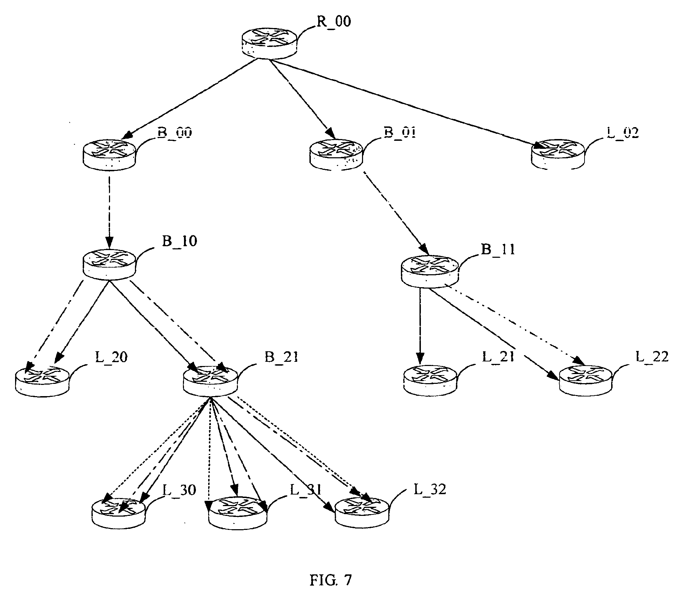

FIG. 7 is a schematic diagram showing a path for sending an FDI packet by some LSRs in an MPLS multicast network according to an embodiment of the present invention. As shown in FIG. 7, solid arrows indicate paths for forwarding a user packet, and one-dotted dashed arrows indicate paths for sending an FDI packet to lower layer branch links that report back the BDI packet when the branch LSR B_10 receives a BDI packet that carries an LSP break failure ID from destination LSRs L_20, L_30, L_31 and L_32. Dotted arrows indicate paths for sending an FDI packet to lower layer branch links that report back the BDI packet when the branch LSR B_21 receives a BDI packet that carries an LSP break failure ID from destination LSRs L_30, L_31, and L_32. Two-dotted dashed arrows indicate paths for sending an FDI packet to lower layer branch links that report back the BDI packet when the branch LSR B_11 receives a BDI packet that carries an LSP break failure ID from the destination LSR L_22. The FDI packet and the user packet are transmitted through a same path.

To make the preceding technical solution clearer, the following gives an example of detecting a multicast link failure with reference to FIG. 3.

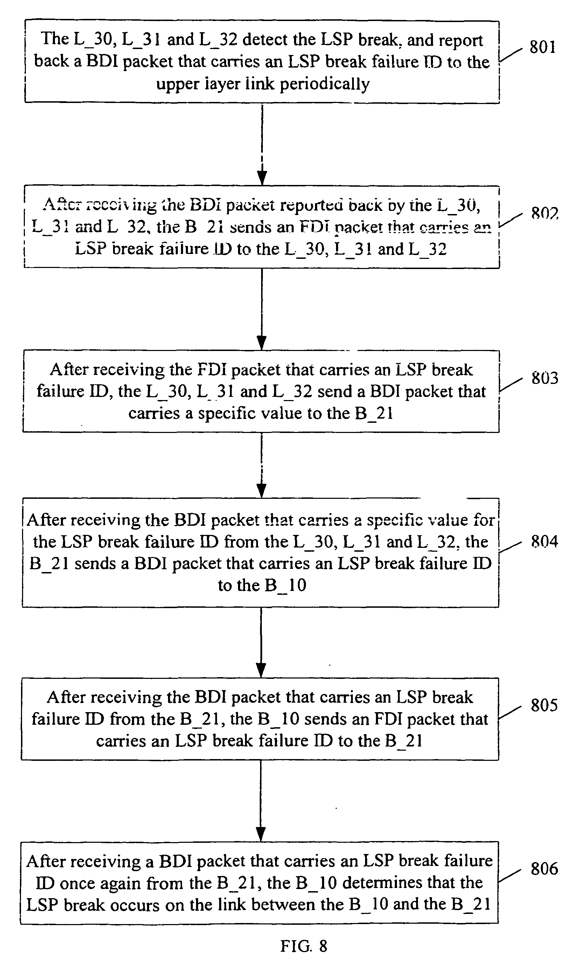

FIG. 8 is flowchart showing the process of detecting link failures when an LSP break occurs on a link between a branch LSR B_10 and a B_21 shown in FIG. 3 according to an embodiment of the present invention. As shown in FIG. 8, the method includes the following Blocks:

Block 801: Destination LSRs L_30, L_31 and L_32 detect the LSP break on a link according to the FDP receiving state, and report a BDI packet that carries an LSP break failure ID back to the upper layer link periodically.

Block 802: After receiving the BDI packet that carries an LSP break failure ID reported back by the L_30, L_31 and L_32, the branch LSR B_21 on the upper layer link sends an FDI packet that carries an LSP break failure ID to the L_30, L_31 and L_32.

Block 803: After receiving the FDI packet that carries an LSP break failure ID, the L_30, L_31 and L_32 send a BDI packet that carries a specific value for the failure type ID to the B_21.

Block 804: After receiving the BDI packet that carries a specific value for the failure type ID from the L_30, L_31 and L_32, the B_21 determines that no failure occurs on the lower layer node, and continues sending the BDI packet that carries an LSP break failure ID to the upper layer branch LSR B_10.

Block 805: After receiving the BDI packet that carries an LSP break failure ID from the B_21, the B_10 sends an FDI packet that carries an LSP break failure ID to the B_21.

In this case, the B_21 cannot receive the FDI packet that carries an LSP break failure ID from the B_10 because an LSP break occurs on a link between branch LSRs B_10 and B_21. As a result, the L_30, L_31 and L_32 cannot receive the FDI packet that carries an LSP break failure ID, but continue sending a BDI packet that carries an LSP break failure ID to the upper layer link. Then, the BDI packet is forwarded by the B_21 to the B_10.

Block 806: The B_10 receives a BDI packet that carries an LSP break failure ID from the B_21 once again, and determines that the LSP break occurs on the link between LSRs B_10 and B_21.

Now the link failure is detected in the MPLS multicast network and the failure location on a link of the MPLS multicast network is determined.

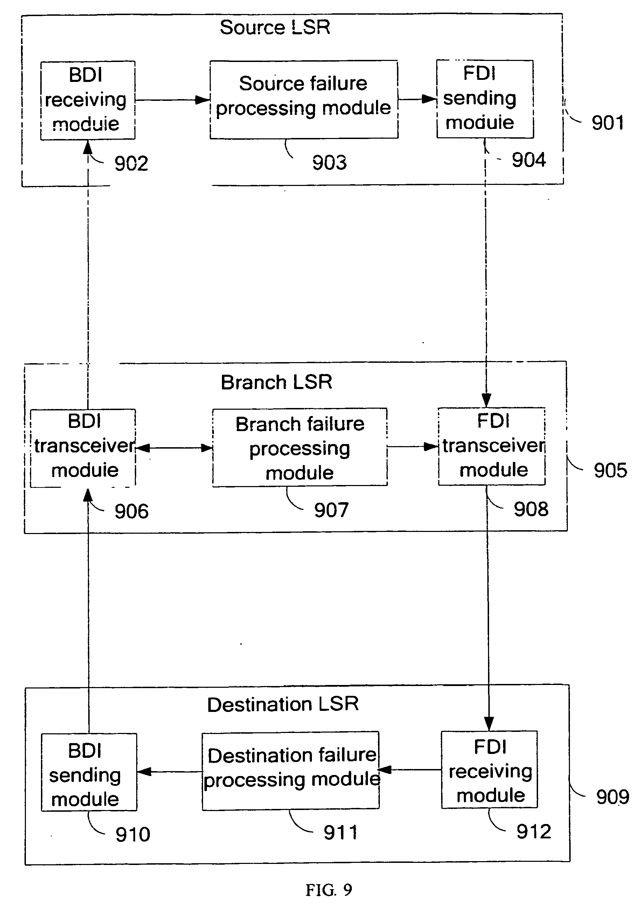

FIG. 9 is a schematic diagram showing a structure of each node in a multicast network system according to an embodiment of the present invention. For simple description, FIG. 9 provides only a branch link that includes a source LSR 901, a branch LSR 905 and a destination LSR 909 in the multicast network system. As shown in FIG. 9, the source LSR 901 includes a BDI receiving module 902, a source failure processing module 903 and an FDI sending module 904; the branch LSR 905 includes a BDI transceiver module 906, a branch failure processing module 907 and an FDI transceiver module 908; and the destination LSR 909 includes a BDI sending module, a destination failure processing module 911 and an FDI receiving module 912.

The following describes functions of each functional module shown in FIG. 9 in the locating of failures.

After the destination LSR 909 detects failures on branch links, the BDI sending module 910 sends a BDI packet that carries a failure type to the BDI transceiver module 906 periodically. The BDI transceiver module 906 sends the received BDI packet to the branch failure processing module 907. The branch failure processing module 907 performs processing as follows according to the failure type in the BDI packet:

(1) When the failure type in the BDI packet is a failure type other than LSP break, the branch failure processing module 907 judges whether the number of branch links that send a BDI packet carrying the same failure type ID is smaller than the total number of branch links; if so, the branch failure processing module 907 determines that this type of failure occurs on the lower layer link of the current branch LSR 905; otherwise, the branch failure processing module 907 cannot determine whether the type of failure occurs on the upper layer link or lower layer link of the current branch LSR 905. In this case, the branch failure processing module 907 controls the BDI transceiver module 906 to forward the BDI packet to the BDI receiving module 902.

(2) When the failure type in the BDI packet is LSP break, the branch failure processing module 907 controls the FDI transceiver module 908 to send an FDI packet that carries an LSP break failure ID to the FDI receiving module 912. and determines the failure location according to the failure type ID in the BDI packet. This involves the following two cases:

(a) If no LSP break occurs on the link between the branch LSR 905 and the destination LSR 909, the FDI receiving module 912 receives an FDI packet and sends it to the destination failure processing module 911; after receiving the FDI packet, the destination failure processing module 911 controls the BDI sending module 910 to send a BDI packet that carries a specific value to the BDI transceiver module 906; the BDI transceiver module 906 sends the BDI packet to the branch failure processing module 907.

(b) If an LSP break occurs on the link between the branch LSR 905 and the destination LSR 909, the FDI receiving module 912 does not receive an FDI packet. In this case, the BDI sending module 910 continues sending a BDI packet that carries an LSP break failure type ID to the BDI transceiver module 906; the BDI transceiver module 906 sends the BDI packet to the branch failure processing module 907.

Thus, when the BDI packet that the branch failure processing module 907 receives once again carries an LSP break failure type, the branch failure processing module 907 may determine that the LSP break occurs on the lower layer link of the branch LSR 905; when the BDI packet that the branch failure processing module 907 receives once again carries a specific value, the branch failure processing module 907 may determine that the LSP break occurs on the upper layer link of the branch LSR 905, and control the BDI transceiver module 906 to forward the BDI packet to the BDI receiving module 902. Then, the source LSR 901 further locates the LSP break.

The source LSR 901 locates a failure by using the same method as the LSR 905. It should be noted that the source LSR 901 is the uppermost layer node and does not have further upper layer nodes. Thus, after receiving a BDI packet from the lower layer node, the source LSR 901 may stop sending an FDI packet but determine that the failure occurs on the lower layer link of the source LSR 901. Therefore, the source LSR 901 in the system shown in FIG. 9 may not include the FDI sending module 904.

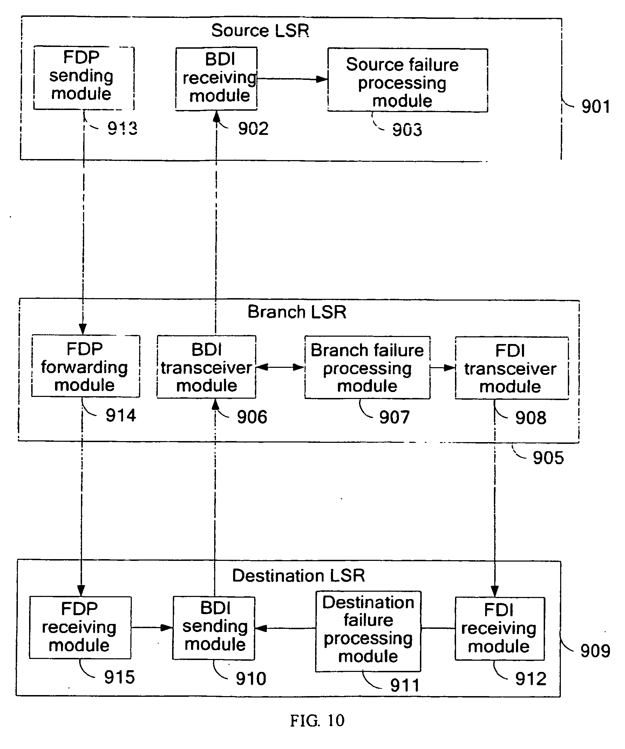

FIG. 10 is a schematic diagram showing another structure of each node in a multicast network system according to an embodiment of the present invention. The difference between FIG. 10 and FIG. 9 is as follows: The source LSR 901 does not include the FDI sending module 904; in addition, the source LSR 901 includes an FDP sending module 913; the branch LSR 905 includes an FDP forwarding module 914; and the destination LSR 909 includes an FDP receiving module 915.

In FIG. 10, the FDP sending module 913 is adapted to send an FDP to all the branch links of the source node where the FDP sending module 913 is located. In this embodiment, the FDP sending module 913 sends an FDP to the FDP forwarding module 914 of the branch LSR 905. The FDP forwarding module 914 is adapted to: receive an FDP from the upper layer node, and forward the FDP to the lower layer node. The FDP receiving module 915 is adapted to: receive an FDP from an upper layer node, and detect failures of branch links where the upper layer node is located according to the FDP receiving state.

After the FDP receiving module 915 of the destination LSR 909 detects failures on branch links, the BDI sending module 910 sends a BDI packet that carries a failure type to the BDI transceiver module 906 periodically. Then, the BDI transceiver module 906, branch failure processing module 907, FDI transceiver module 908, BDI sending module 910, destination failure processing module 911, FDI receiving module 912 and BDI receiving module 902 perform processing in a mode as shown in FIG. 9, which is not described further herein. After receiving the BDI packet from the BDI receiving module 902, the source failure processing module 903 directly determines that the failure occurs on the link between the source LSR 901 and the branch LSR 905.

The technical solution in the preceding embodiment is also applicable to the detection of failures in other types of multicast networks, for example, Ethernet multicast network. When the preceding solution is used in other multicast networks, only the types of FDP, FDI and BDI need to be changed to meet the transmission protocol requirements of other multicast networks.

In the technical solution of the present invention, the tree structure characteristics of the multicast network are utilized; the source node sends an FDP to the destination nodes; each destination node detects the FDP receiving state in real time, and detects link failures according to the FDP receiving state. Thus, failures of all links in the multicast network can be detected. In addition, in the technical solution in embodiments of the present invention, a defect indicator is sent from the destination nodes in the multicast network to the source node, which can locate link failures in the multicast network.

## Claims

1. A method for detecting link failures in a multicast network, comprising:
receiving (Block 102), by a branch node on each branch link, a failure detection packet FDP sent from an upper layer node of the branch node; and
forwarding (Block 103), by the branch node, the FDP to a lower layer node of the branch node until the FDP arrives at a destination node; wherein the destination node is adapted to detect failures between the destination node and the lower layer node of the branch node according to the FDP receiving state and send a backward defect indicator BDI packet to an upper layer node of the destination node after the destination node detects the failures;
wherein the FDP sent from a source node for detecting link failures is sent to all the branch nodes of the source node on each branch link
**characterized by**: the method further comprising:
determining, by the branch node, a failure position where the failure occurs after receiving the BDI packet coming from the lower layer node of the branch node; and
reporting, by the branch node, the failure position where the failure occurs to the upper layer node of the branch node, when the failure occurs between the branch node and the lower layer node of the branch node.

2. The method according to claim 1, further comprising:
forwarding the BDI packet to the upper layer node of the branch node when no failure occurs between the branch node and the lower layer node of the branch node.

3. The method according to claim 2, wherein when the BDI packet carries a label switching router (LSP) break failure ID, the step of determining the failure position further comprises:
sending (Block 401), by the branch node, an forward defect indicator FDI packet carrying an LSP break failure ID to all lower layer branch nodes that report a BDI packet carrying an LSP break failure ID to the branch node, after the branch node receives the BDI packet that carries an LSP break failure ID, wherein the FDI packet is forwarded until it arrives at the destination node; and determining, by the branch node, another failure position where the failure occurs after receiving another BDI packet from the lower layer node of the branch node according the FDI packet; and
determining (Block 402) that said another BDI packet carrying a specific value is to be sent to the upper layer node if the destination node receives the FDI packet, or that the BDI packet carrying the LSP break failure ID is sent to the upper layer node if the destination node does not receive the FDI packet.

4. The method according to claim 3, wherein the step of determining said another failure position by the branch node where the failure occurs after receiving said another BDI packet from the lower layer node of the branch node according the FDI packet, further comprises:
determining that said another failure occurs between the branch node and the lower layer node, if the LSP break failure ID is carried in said another BDI packet received by the branch node; or
determining that said another failure occurs between the branch node and the upper layer node of the branch node, if the specific value is carried in said another BDI packet received by the branch node.

5. The method according to claim 2, wherein when the BDI packet carries a failure type ID other than LSP break failure ID, the step of determining, by the branch node, a failure position further comprises:
determining the failure position according to comparing the number of lower layer nodes of the branch node that report the BDI packet carrying a failure type ID back to the branch node and the total number of lower layer nodes of the branch node.

6. The method according to claim 5, wherein the step of determining, by the branch node, a failure position further comprises :
determining (Block 501) that the failure occurs between the branch node and the lower layer node of the branch node, when the number of lower layer nodes that report the BDI packet carrying a failure type ID back to the branch node is smaller than the total number of lower layer nodes of the branch node.

7. A multicast network system, comprising:
a source node (901) adapted to send a failure detection packet FDP to all branch nodes;
more than one branch node (905), each branch node being adapted to receive the FDP from a upper layer node of branch node, and forward the FDP to more than one lower layer node of branch node; and
more than one destination node (909), each destination node being adapted to receive the FDP from the upper layer branch node of the destination node, and detect failures between the source node and the destination node according to the FDP receiving state,
**characterized by**: each branch node (905) further adapted to determine a failure position where the failure occurs after receiving a backward defect indicator BDI packet coming from the lower layer node of the branch node; and report the failure position where the failure occurs to the upper layer node of the branch node, when the failure occurs between the branch node (905) and the lower layer node of the branch node.

8. The multicast network system according to claim 7, wherein:
the destination node (909) is further adapted to send a BDI packet that carries a failure type to the branch node (905) periodically;
the branch node (905) is further adapted to receive the BDI packet and forward the BDI packet to the upper layer node of the branch node (905); and
the source node (901) is further adapted to receive the BDI packet send by the branch node (905).

9. The multicast network system according to claim 7, wherein:
the destination node (909) is further adapted to send a BDI packet that carries a failure type to the branch node (905) periodically; and
the branch node (905) is further adapted to send a forward defect indicator FDI packet that carries an LSP break failure ID to the destination node (909), when the BDI packet carries the LSP break failure ID.

10. The multicast network system according to claim 9, wherein:
the destination node (909) is further adapted to send the BDI packet that carries a specific value to the branch node (905) after receiving the FDI packet; and
the branch node (905) is further adapted to determine that an LSP break occurs on an upper layer link of the branch node (905), when the BDI packet that the branch node (905) receives carries a specific value; or the branch node (905) is further adapted to determine that an LSP break occurs on a lower layer link of the branch node (905), when the BDI packet that the branch node (905) receives carries an LSP break failure type except the specific value.

11. A branch node, comprising:
an FDP forwarding module (914), adapted to receive a failure detection packet FDP from an upper layer node of the branch node, and forward the FDP to a lower layer node of the branch node;
a BDI transceiver module (906), adapted to receive a backward defect indicator BDI sent from the lower layer node according to the FDP, and forward the BDI to the upper layer node of the branch node;
further comprising:
a branch failure processing module (907), adapted to determine the failure location, when a failure type ID carried in the BDI received from the BDI transceiver module is not a link break failure ID; or send a first command to a forward defect indicator transceiver module (908), and determine the failure location according to the failure type ID carried in the BDI , when the failure type ID is the link break failure ID; and
the forward defect indicator transceiver module (908), adapted to send a forward defect indicator (FDI) that includes the link break failure ID to the lower layer node of the branch node according to the first command of the branch failure processing module (907).

12. The branch node according to claim 11, wherein:
the branch failure processing module (907) is further adapted to determine that the LSP break occurs on the upper layer link of the branch node, and control the BDI transceiver module to forward the BDI packet to the upper layer node of the branch node; and
the forward defect indicator (FDI) transceiver module (908) is further adapted to receive the FDI carried the link break failure ID, and forward the FDI to the lower layer node of the branch node.

## Patentansprüche

1. Verfahren zum Detektieren von Verbindungsstörungen in einem Multicast-Netz, das Folgendes umfasst:
Empfangen (Block 102) durch einen Verzweigungsknoten in jeder Verzweigungsverbindung eines Störungsdetektionspakets FDP, das von einem Knoten einer oberen Schicht des Verzweigungsknotens gesendet wird, und
Weiterleiten (Block 103) durch den Verzweigungsknoten des FDP zu einem Knoten einer unteren Schicht des Verzweigungsknotens, bis das FDP an einem Zielknoten ankommt; wobei der Zielknoten dafür ausgelegt ist, Störungen zwischen dem Zielknoten und dem Knoten einer unteren Schicht des Verzweigungsknotens in Übereinstimmung mit dem FDP-Empfangszustand zu detektieren und ein Rückwärts-Fehlerindikator-Paket, BDI-Paket, an einen Knoten einer oberen Schicht des Zielknotens zu senden, nachdem der Zielknoten die Störungen detektiert hat;
wobei das von einem Quellknoten zum Detektieren von Verbindungsstörungen gesendete FDP an alle Verzweigungsknoten des Quellknotens in jeder Verzweigungsverbindung gesendet wird,
**dadurch gekennzeichnet, dass** das Verfahren ferner Folgendes umfasst:
Bestimmen durch den Verzweigungsknoten einer Störungsposition, wo die Störung auftritt, nach dem Empfangen des BDI-Pakets, das von dem Knoten einer unteren Schicht des Verzweigungsknotens kommt; und
Berichten durch den Verzweigungsknoten der Störungsposition, wo die Störung auftritt, an den Knoten einer oberen Schicht des Verzweigungsknotens, wenn die Störung zwischen dem Verzweigungsknoten und dem Knoten einer unteren Schicht des Verzweigungsknotens auftritt.

2. Verfahren nach Anspruch 1, das ferner Folgendes umfasst:
Weiterleiten des BDI-Pakets an den Knoten einer oberen Schicht des Verzweigungsknotens, wenn zwischen dem Verzweigungsknoten und dem Knoten einer unteren Schicht des Verzweigungsknotens keine Störung auftritt.

3. Verfahren nach Anspruch 2, wobei dann, wenn das BDI-Paket eine Etikettenumschaltungs-Router-Unterbrechungsstörungs-ID (LSP-Unterbrechungsstörungs-ID) führt, der Schritt des Bestimmens der Störungsposition ferner Folgendes umfasst:
Senden (Block 401) durch den Verzweigungsknoten eines Weiterleitungsdefektindikator-Pakets, FDI-Pakets, das eine LSP-Unterbrechungsstörungs-ID führt, an alle Verzweigungsknoten einer unteren Schicht,
die ein BDI-Paket, das eine LSP-Unterbrechungsstörungs-ID führt, an den Verzweigungsknoten melden, nachdem der Verzweigungsknoten das BDI-Paket empfangen hat, das eine LSP-Unterbrechungsstörungs-ID führt, wobei das FDI-Paket weitergeleitet wird, bis es an dem Zielknoten ankommt; und Bestimmen durch den Verzweigungsknoten einer weiteren Störungsposition, wo die Störung auftritt, nach dem Empfangen eines weiteren BDI-Pakets von dem Knoten einer unteren Schicht des Verzweigungsknotens in Übereinstimmung mit dem FDI-Paket; und
Bestimmen (Block 402), dass das weitere BDI-Paket, das einen spezifischen Wert führt, an den Knoten einer oberen Schicht zu senden ist, falls der Zielknoten das FDI-Paket empfängt, oder dass das BDI-Paket, das die LSP-Unterbrechungsstörungs-ID führt, an den Knoten einer oberen Schicht gesendet wird, falls der Zielknoten das FDI-Paket nicht empfängt.

4. Verfahren nach Anspruch 3, wobei der Schritt des Bestimmens der weiteren Störungsposition durch den Verzweigungsknoten, wo die Störung auftritt, nach dem Empfangen des weiteren BDI-Pakets von dem Knoten einer unteren Schicht des Verzweigungsknotens in Übereinstimmung mit dem FDI-Paket ferner Folgendes umfasst:
Bestimmen, dass die weitere Störung zwischen dem Verzweigungsknoten und dem Knoten einer unteren Schicht auftritt, falls die LSP-Unterbrechungsstörungs-ID in dem weiteren BDI-Paket geführt wird, das durch den Verzweigungsknoten empfangen wird; oder
Bestimmen, dass die weitere Störung zwischen dem Verzweigungsknoten und dem Knoten einer oberen Schicht des Verzweigungsknotens auftritt, falls der spezifische Wert in dem weiteren BDI-Paket geführt wird, das durch den Verzweigungsknoten empfangen wird.

5. Verfahren nach Anspruch 2, wobei, wenn das BDI-Paket eine Störungstyp-ID führt, die von der LSP-Unterbrechungsstörungs-ID verschieden ist, der Schritt des Bestimmens einer Störungsposition durch den Verzweigungsknoten ferner Folgendes umfasst:
Bestimmen der Störungsposition in Übereinstimmung mit dem Vergleich der Anzahl der Knoten einer unteren Schicht des Verzweigungsknotens, die das BDI-Paket, das eine Störungstyp-ID führt, zurück an den Verzweigungsknoten melden, und der Gesamtzahl der Knoten einer unteren Schicht des Verzweigungsknotens.

6. Verfahren nach Anspruch 5, wobei der Schritt des Bestimmens einer Störungsposition durch den Verzweigungsknoten ferner Folgendes umfasst:
Bestimmen (Block 501), dass die Störung zwischen dem Verzweigungsknoten und dem Knoten einer unteren Schicht des Verzweigungsknotens auftritt, wenn die Anzahl der Knoten einer unteren Schicht, die das BDI-Paket, das eine Störungstyp-ID führt, zurück zu dem Verzweigungsknoten melden, kleiner als die Gesamtzahl der Knoten einer unteren Schicht des Verzweigungsknotens ist.

7. Multicast-Netzsystem, das Folgendes umfasst:
einen Quellknoten (901), der dafür ausgelegt ist, ein Störungsdetektionspaket FDP an alle Verzweigungsknoten zu senden;
mehr als einen Verzweigungsknoten (905), wobei jeder Verzweigungsknoten dafür ausgelegt ist, das FDP von einem Knoten einer oberen Schicht des Verzweigungsknotens zu empfangen und das FDP zu mehr als einem Knoten einer unteren Schicht des Verzweigungsknotens weiterzuleiten; und
mehr als einen Zielknoten (909), wobei jeder Zielknoten dafür ausgelegt ist, das FDP von dem Verzweigungsknoten einer oberen Schicht des Zielknotcns zu empfangen und die Störungen zwischen dem Quellknoten und dem Zielknoten in Übereinstimmung mit dem FDP-Empfangszustand zu detektieren,
**dadurch gekennzeichnet, dass** jeder Verzweigungsknoten (905) ferner dafür ausgelegt ist, eine Störungsposition, wo die Störung auftritt, nach dem Empfangen eines Rückwärts-Fehlerindikator-Pakets, BDI-Pakets, das von dem Knoten einer unteren Schicht des Verzweigungsknotens kommt, zu bestimmen; und die Störungspositionen, wo die Störung auftritt, an den Knoten einer oberen Schicht des Verzweigungsknotens zu melden, wenn die Störung zwischen dem Verzweigungsknoten (905) und dem Knoten einer unteren Schicht des Verzweigungsknotans auftritt.

8. Multicast-Netzsystcm nach Anspruch 7, wobei:
der Zielknoten (909) ferner dafür ausgelegt ist, ein BDI-Paket, das einen Störungstyp führt, periodisch an den Verzweigungsknoten (905) zu senden;
der Verzweigungsknoten (905) ferner dafür ausgelegt ist, das BDI-Paket zu empfangen und das BDI-Paket an den Knoten einer oberen Schicht des Verzweigungsknotens (905) weiterzuleiten; und
der Quellknoten (901) ferner dafür ausgelegt ist, das durch den Verzweigungsknoten (905) gesendete BDI-Paket zu empfangen.

9. Multicast-Netzsystem nach Anspruch 7, wobei:
der Zielknoten (909) ferner dafür ausgelegt ist, ein BDI-Paket, das einen Störungstyp führt, periodisch an den Verzweigungsknoten (905) zu senden; und
der Verzweigungsknoten (905) ferner dafür ausgelegt ist, ein Weiterleitungsdefektindikatvr-Paket, FDI-Paket, das eine LSP-Unterbrechungsstörungs-ID führt, an den Zielknoten (909) zu senden, wenn das BDI-Paket die LSP-Unterbrechungsstörungs-ID führt.

10. Multicast-Netzsystem nach Anspruch 9, wobei:
der Zielknoten (909) ferner dafür ausgelegt ist, das BDI-Paket, das einen spezifischen Wert führt, nach dem Empfangen des FDI-Pakets an den Verzweigungsknoten (905) zu senden; und
der Verzweigungsknoten (905) ferner dafür ausgelegt, zu bestimmen, dass eine LSP-Unterbrechung in einer Verbindung einer oberen Schicht des Verzweigungsknotens (905) auftritt, wenn das BDI-Paket, das der Verzweigungsknoten (905) empfängt, einen spezifischen Wert führt; oder der Verzweigungsknoten (905) ferner dafür ausgelegt ist, zu bestimmen, dass eine LSP-Unterbrechung in einer Verbindung einer unteren Schicht des Verzweigungsknotens (905) auftritt, wenn das BDI-Paket, das der Verzweigungsknoten (905) empfängt, einen LSP-Unterbrechungsstörungstyp mit Aufnahme des spezifischen Wertes führt.

11. Verzweigungsknoten, der Folgendes umfasst:
ein FDP-Weiterleitungsmodul (914), das dafür ausgelegt ist, ein Störungsdetektionspaket FDP von einem Knoten einer oberen Schicht des Verzweigtungsknotens zu empfangen und das FDP zu einem Knoten einer unteren Schicht des Verzweigungsknotens weiterzuleiten;
ein BDI-Sender/Empfänger-Modul (906), das dafür ausgelegt ist, einen Rückwärts-Fehlerindikator BDI, der von dem Knoten einer unteren Schicht gesendet wird, in Übereinstimmung mit dem FDP zu empfangen und den BDI zu dem Knoten einer oberen Schicht des Verzweigungsknotens weiterzuleiten;
und der ferner Folgendes umfasst:
ein Verzweigungsstörungs-Verarbeitungsmodul (907), das dafür ausgelegt ist, den Störungsort zu bestimmen, wenn eine Störungstyp-ID, die in dem BDI geführt wird,
das von dem BDI-Sander/Empfänger-Modul empfangen wird, keine Verbindungsunterbrechungs-Störungs-ID ist; oder einen ersten Befehl an ein Weiterleitungsdefektindikator-Sender/Empfänger-Modul (908) zu senden und den Störungsort in Übereinstimmung mit der in dem BDI Übertragenen Störungstyp-ID zu bestimmen, wenn die Störungstyp-ID die Verbindungsunterbrechungs-Störungs-ID ist; und
das Weiterleitungsdefektindikator-Sender/Empfänger-Modul (908), das dafür ausgelegt ist, einen Weiterleitungsdefektindikator (FDI), der die Verbindungsunterbrechungs-Störungs-ID enthält, an den Knoten einer unteren Schicht des Verzweigungsknotens in Übereinstimmung mit dem ersten Befehl des Verzweigungsstörungs-Verarbeitungsmoduls (907) zu senden.

12. Verzweigungsknoten nach Anspruch 11, wobei:
das Verzweigungsstörungs-Verarbeitungsmodul (907) ferner dafür ausgelegt ist, zu bestimmen, dass die LSP-Unterbrechung in der Verbindung einer oberen Schicht des Verzweigungsknotens auftritt, und das BDI-Sender/Empfänger-Modul zu steuern, das BDI-Paket zu dem Knoten einer oberen Schicht des Verzweigungsknotens weiterzuleiten; und
das Weiterleitungsdefektindikator-Sender/Empfänger-Modul (FDI-Sender/Empfänger-Modul) (908) ferner dafür ausgelegt ist, den FDI zu empfangen, der in der Verbindungsunterbrechungs-Störungs-ID geführt wird, und den FDI zu dem Knoten einer unteren Schicht des Verzweigungsknotens weiterzuleiten.

## Revendications

1. Procédé de détection de défaillances de liaison dans un réseau de multidiffusion, comprenant:
la réception (Bloc 102), par un noeud de branchement sur chaque liaison de branchement, d'un paquet de détection de défaillance FDP envoyé depuis un noeud de couche supérieure du noeud de branchement ; et
l'acheminement (Bloc 103), par le noeud de branchement, du FDP jusqu'à un noeud de couche inférieure du noeud de branchement jusqu'à ce que le FDP arrive à un noeud destinataire ; le noeud destinataire étant adapté pour détecter des défaillances entre le noeud destinataire et le noeud de couche inférieure du noeud de branchement en fonction de l'état de réception du FDP et envoyer un paquet d'indicateur de défaut de retour BDI à un noeud de couche supérieure du noeud destinataire après que le noeud destinataire a détecté les défaillances ;
dans lequel le FDP envoyé depuis un noeud source pour détecter des défaillances de liaison est envoyé à tous les noeuds de branchement du noeud source sur chaque liaison de branchement
**caractérisé en ce que** le procédé comprend en outre :
la détermination, par le noeud de branchement, d'une position de défaillance où se produit la défaillance après la réception du paquet BDI depuis le noeud de couche inférieure du noeud de branchement ; et
la communication, par le noeud de branchement, au noeud de couche supérieure du noeud de branchement, de la position de défaillance où se produit la défaillance quand la défaillance se produit entre le noeud de branchement et le noeud de couche inférieure du noeud de branchement.

2. Procédé selon la revendication 1, comprenant en outre :
l'acheminement du paquet BDI jusqu'au noeud de couche supérieure du noeud de branchement quand aucune défaillance se produit entre le noeud de branchement et le noeud de couche inférieure du noeud de branchement.

3. Procédé selon la revendication 2, dans lequel quand le paquet BDI inclut un ID de défaillance de rupture de routeur de commutation d'étiquettes (LSP), l'étape de détermination de la position de défaillance comprend en outre :
l'envoi (Bloc 401), par le noeud de branchement, d'un paquet d'indicateur de défaillance aller FDI incluant un ID de défaillance de rupture de LSP à tous les noeuds de branchement de couche inférieure qui communiquent un paquet BDI incluant un ID de défaillance de rupture de LSP au noeud de branchement, après que le noeud de branchement a reçu le paquet BDI qui inclut un ID de défaillance de rupture de LSP, le paquet FDI étant acheminé jusqu'à ce qu'il arrive au noeud destinataire ; et la détermination, par le noeud de branchement, d'une autre position de défaillance où se produit la défaillance après la réception d'un autre paquet BDI depuis le noeud de couche inférieure du noeud de branchement en fonction du paquet FDI ; et
la détermination (Bloc 402) que ledit autre paquet BDI incluant une valeur spécifique doit être envoyé au noeud de couche supérieure si le noeud destinataire reçoit le paquet FDI, ou que le paquet BDI incluant l'ID de défaillance de rupture de LSP est envoyé au noeud de couche supérieure si le noeud destinataire ne reçoit pas le paquet FDI.

4. Procédé selon la revendication 3, dans lequel l'étape de détermination par le noeud de branchement de ladite autre position de défaillance où se produit la défaillance après la réception dudit autre paquet BDI depuis le noeud de couche inférieure du noeud de branchement en fonction du paquet FDI comprend en outre :
la détermination que ladite autre défaillance se produit entre le noeud de branchement et le noeud de couche inférieure, si l'ID de défaillance de rupture de LSP est incluse dans ledit autre paquet BDI reçu par le noeud de branchement ; ou
la détermination, que ladite autre défaillance se produit entre le noeud de branchement et le noeud de couche supérieure du noeud de branchement, si la valeur spécifique est incluse dans ledit autre paquet BDI reçu par le noeud de branchement.

5. Procédé selon la revendication 2, dans lequel quand le paquet BDI inclut un ID de type de défaillance autre que l'ID de défaillance de rupture de LSP, l'étape de détermination, par le noeud de branchement, d'une position de défaillance comprend en outre :
la détermination de la position de défaillance en fonction de la comparaison du nombre de noeuds de couche inférieure du noeud de branchement qui communiquent le paquet BDI incluant un ID de type de défaillance au noeud de branchement et du nombre total de noeuds de couche inférieure du noeud de branchement.

6. Procédé selon la revendication 5, dans lequel l'étape de détermination, par le noeud de branchement, d'une position de défaillance, comprend en outre :
la détermination (Bloc 501) que la défaillance se produit entre le noeud de branchement et le noeud de couche inférieure du noeud de branchement, quand le nombre de noeuds de couche inférieure qui communiquent le paquet BDI qui inclut un ID de type de défaillance au noeud de branchement est plus petit que le nombre total de noeuds de couche inférieure du noeud de branchement.

7. Système de réseau de multidiffusion, comprenant :
un noeud source (901) adapté pour envoyer un paquet de détection de défaillance FDP à tous les noeuds de branchement;
plus d'un noeud de branchement (905), chaque noeud de branchement étant adapté pour recevoir le FDP depuis un noeud de couche supérieure du noeud de branchement,
et communiquer le FDP à plus d'un noeud de couche inférieure du noeud de branchement ; et
plus d'un noeud destinataire (909), chaque noeud destinataire étant adapté pour recevoir le FDP depuis le noeud de branchement de couche supérieure du noeud destinataire, et détecter des défaillances entre le noeud source et le noeud destinataire en fonction de l'état de réception du FDP ;
**caractérisé par** : chaque noeud de branchement (905) étant adapté en outre pour déterminer une position de défaillance où se produit la défaillance après la réception d'un paquet d'indicateur de défaillance retour BDI depuis le noeud de couche inférieure du noeud de branchement ; et communiquer au noeud de couche supérieure du noeud de branchement la position de défaillance où se produit la défaillance,
quand la défaillance se produit entre le noeud de branchement (905) et le noeud de couche inférieure du noeud de branchement.

8. Système de réseau de multidiffusion selon la revendication 7, dans lequel :
le noeud destinataire (909) est adapté en outre pour envoyer périodiquement un paquet BDI qui inclut un type de défaillance au noeud de branchement (905) ;
le noeud de branchement (905) est adapté en outre pour recevoir le paquet BDI et acheminer le paquet BDI jusqu'au noeud de couche supérieure du noeud de branchement (905) ; et
le noeud source (901) est adapté en outre pour recevoir le paquet BDI envoyé par le noeud de branchement (905).

9. Système de réseau de multidiffusion selon la revendication 7, dans lequel :
le noeud destinataire (909) est adapté en outre pour envoyer périodiquement un paquet BDI qui inclut un type de défaillance au noeud de branchement (905) ; et
le noeud de branchement (905) est adapté en outre pour envoyer un paquet d'indicateur de défaillance aller FDI qui inclut un ID de défaillance de rupture de LSP au noeud destinataire (909), quand le paquet BDI inclut l'ID de défaillance de rupture de LSP.

10. Système de réseau de multidiffusion selon la revendication 9, dans lequel :
le noeud destinataire (909) est adapté en outre pour envoyer le paquet BDI qui inclut une valeur spécifique au noeud de branchement (905) après la réception du paquet FDI ; et
le noeud de branchement (905) est adapté en outre pour déterminer qu'une rupture de LSP se produit sur une liaison de couche supérieure du noeud de branchement (905),
quand le paquet BDI que reçoit le noeud de branchement (905) inclut une valeur spécifique ; ou le noeud de branchement (905) est adapté en outre pour déterminer qu'une rupture de LSP se produit sur une liaison de couche inférieure du noeud de branchement (905) , quand le paquet BDI que reçoit le noeud de branchement (905) inclut un type de défaillance de rupture LSP sauf la valeur spécifique.

11. Noeud de branchement, comprenant :
un module d'acheminement FDP (914), adapté pour recevoir un paquet de détection de défaillance FDP depuis un noeud de couche supérieure du noeud de branchement,
et acheminer le FDP jusqu'à un noeud de couche inférieure du noeud de branchement ;
un module émetteur-récepteur BDI (906), adapté pour recevoir un indicateur de défaut retour BDI envoyé par le noeud de couche inférieure selon le FDP, et
acheminer le BDI jusqu'au noeud de couche supérieure du noeud de branchement;
comprenant en outre :
un module de traitement de défaillance de branche (907), adapté pour déterminer la position de défaillance, quand un ID de type de défaillance inclus dans le BDI reçu depuis le module émetteur-récepteur BDI n'est pas un ID de défaillance de rupture de liaison ; ou envoyer une première commande à un module émetteur-récepteur d'indicateur de défaillance aller (908), et déterminer la position de défaillance en fonction de l'ID de type de défaillance inclus dans le BDI, quand l'ID de type de défaillance est l'ID de défaillance de rupture de liaison ; et
le module émetteur-récepteur d'indicateur de défaillance aller (908), adapté pour envoyer un indicateur de défaillance aller (FDI) qui comporte l'ID de défaillance de rupture de liaison au noeud de couche inférieure du noeud de branchement en fonction de la première commande du module de traitement de défaillance de branchement (907).

12. Noeud de branchement selon la revendication 1 1 , dans lequel :
le module de traitement de défaillance de branchement (907) est adapté en outre pour déterminer que la rupture de LSP se produit sur la liaison de couche supérieure du noeud de branchement, et commander au module émetteur-récepteur de BDI d'acheminer le paquet BDI jusqu'au noeud de couche supérieure du noeud de branchement ; et
le module émetteur-récepteur d'indicateur de défaillance aller (FDI) (908) est adapté en outre pour recevoir le FDI inclus dans l'ID de défaillance de rupture de liaison, et acheminer le FDI jusqu'au noeud de couche inférieure du noeud de branchement.
